# EUROPEAN PATENT APPLICATION

(11) **EP 1 829 753 A1**
(43) Date of publication of application: **05.09.2007**
(21) Application number: 06025521.3
(22) Date of filing: 11.12.2006
(51) Int. Cl.: B60R 19/24, B60R 19/34

(54) **Crash box**

(30) Priority: 02.03.2006 EP 06004196
(71) Applicant: Wagon Automotive GmbH, 63857 Waldaschaff (DE)
(72) Inventor: Diehm, Jürgen, 97877 Wertheim (DE); Kreiling, Peter, 63654 Bündingen (DE)
(74) Representative: Gesthuysen, von Rohr & Eggert

(57) **Abstract**

Crash box, preferably for a vehicle bumper mounting structure, comprising a base profile (I) of generally rectangular hollow cross section designed as a closed box hollow profile extending in a lengthwise direction, and a reinforcement member (2) extending parallel to the base profile (1) in the lengthwise direction over more or less the full length of the base profile (1). The reinforcement member (2) is as well a closed box hollow profile of generally rectangular hollow cross section and is positioned at the outside of the base profile (1) with one of its flat sides (2') abutting the corresponding flat side (1') of the base profile (1). The base profile (1) and the reinforcement member (2) are made from metal and are connected by welding over more or less the full length of the base profile (1) at opposite corners (3) thereof.

## Description

This invention relates to a crash box which is preferably used in a vehicle bumper mounting structure, and in particular to a crash box with the features of the introductory part of claim 1 or claim 5.

Crash boxes as described here are used to achieve that a bumper beam efficiently transfers a large collision energy to the vehicle chassis.

Various types of vehicle bumper mounting structures have been known so far in which a bumper beam extending transversely of a chassis and covered with a bumper face is mounted to the chassis through two crash boxes which are oriented in the lengthwise direction of the chassis.

One example of such a crash box is disclosed in US-A-5,803,514. Here the crash box comprises a base profile of generally rectangular hollow cross section altogether designed as a closed box hollow profile extending in a lengthwise direction (as such, as well as a lengthwise direction of the chassis when the crash box is mounted to the chassis). This closed box base profile is made from high strength steel from a first split half and a second split half that are spot welded together. An extension member extending into the crosswise extending bumper beam has a downwards oriented channel cross section and is fitted between the sidewalls of the first split half and connected to this by welding.

A similar crash box, which is preferably used with a vehicle bumper mounting structure, but can be used at other locations of a vehicle body, too, forms the starting point of the invention (DE-C-40 37 408). This crash box has a base profile of generally rectangular hollow cross section designed as a closed box hollow profile which extends in the lengthwise direction, as explained above. The base profile is made from extruded thermoplastic material. In addition to the base profile there is a reinforcement member made as an extruded profile from plastics as well which is extending parallel to the base profile in the lengthwise direction over the full length of the base profile. The reinforcement member is designed as a block of crosswise extending partitions inserted into the rectangular hollow interior of the base profile.

The object of the invention is to propose a crash box, preferably for a vehicle bumper mounting structure, that has features particularly suitable for vehicle bumper applications.

The crash box that meets above mentioned object of the invention is characterized by the features of claim 1. A second version of this inventive crash box is described by the features of independent claim 5.

Both versions of the crash box are preferably intended for a vehicle bumper mounting structure. However both versions may be used at other locations in a vehicle body structure where the above explained impact absorption function is necessary or helpful.

Both versions of the crash box show the reinforcement member outside of the base profile but next to it and facing, preferably abutting, one of its flat sides or being attached to the base profile from the outside thereof. Both profiles, the base profile and the reinforcement member, are made from metal and are connected by welding over more or less the full length of the base profile either at opposite corners thereof (in the first version) or with the U-shaped profile of the reinforcement member at opposite flat sides of the base profile (in the second version).

In the first version both profiles are designed as closed box hollow profiles. They may even be more or less identical. So they have two walls next to each other at the flat sides of the profiles.

In a modification of the first version, whereas the overall cross section of the base profile and the reinforcement member may still be more or less identical, the detailed structure of the reinforcement member is substantially different from the structure of the base profile. The flat side of the reinforcement member has an open middle section of preferably at least half of the full width of said flat side that extends over the full length of said flat side. In fact there are only two narrow flanges left extending inwardly from the left and right sides of the reinforcement member so that it is still possible to provide the welding seams at opposite corners thereof. This modification eliminates a double wall in the middle between base profile and reinforcement member.

In the second version the reinforcement member is attached to the base profile from the outside thereof which is possible, because this reinforcement member is U-shaped. There is only one single wall inside of the crash box consisting of base profile and reinforcement member.

With the generally open, U-shaped reinforcement member it is possible to obtain a conical form of the crash box as such just by slightly tilting the reinforcement member relative to the base member.

It was said that both profiles are made from metal and are connected by welding over more or less the full length of the base profile. One possibility to realize this structure is to make both profiles as extruded beams from light metal. This will normally by aluminum.

The preferred embodiment of the invention, however, comprises profiles that are made from sheet steel which is brought into its final shape by bending or preferably roll-forming. A thickness of 1,0 mm for a high strength steel will be a reasonable choice of material.

If specific impact absorption characteristics shall be realized it is possible that the base profile and/or the reinforcement member is provided with crosswise and/or lengthwise extending ribs and/or cutouts. Crosswise extending ribs or cutouts influence the folding characteristics in the lengthwise direction, whereas lengthwise extending ribs are reinforcing the generally rectangular hollow profile in the lengthwise direction.

In particular the first version of the crash box with two more or less identical closed box hollow profiles next to each other might need some ribs or cutouts in the flat sides abutting each other in the middle of the crash box.

For the version where both profiles are made from sheet steel it is generally possible to have a two-part-structure of one profile or both profiles with halves which are mated and welded together as in above mentioned document US-A-5,803,514. In general, however, it is preferred to have one single piece of material that forms the respective profile.

The second version has a modification that is particularly interesting as far as manufacturing is concerned. Moreover, this modification is particularly interesting if a unitary strip of sheet steel is used. The base profile and the reinforcement member can be made from this unitary strip of sheet metal, in particular of sheet steel, by bending this strip into the form of the figure "6" or the figure "9", however, closing this figure by an extension of the free edge thereof. It is preferable that the figure "6" or "9" has a rather rectangular design with rather sharp edges. With this shape of the unitary strip of sheet metal there are two areas where the edges of the sheet metal may be welded to other parts of the sheet metal at opposite flat sides of the complete structure.

Another version may include bending the strip in the form of the figure "8" with welding seams on both sides of the crossover area.

Now, both versions of the invention are to be explained in more detail with reference to the drawings. In the drawings
- Fig. 1: shows a perspective schematic view of a first version of a crash box according to the invention,
- Fig. 2: shows a cross section of the crash box in Fig. 1,
- Fig. 3: shows a cross section similar to Fig. 2 of a modification of the crash box according to Fig. 1,
- Fig. 4: shows a perspective schematic view of a second version of a crash box according to the invention,
- Fig. 5: shows a cross section of the crash box in Fig. 4,
- Fig. 6: shows a cross section similar to Fig. 5 of a modification of the second version of the crash box.

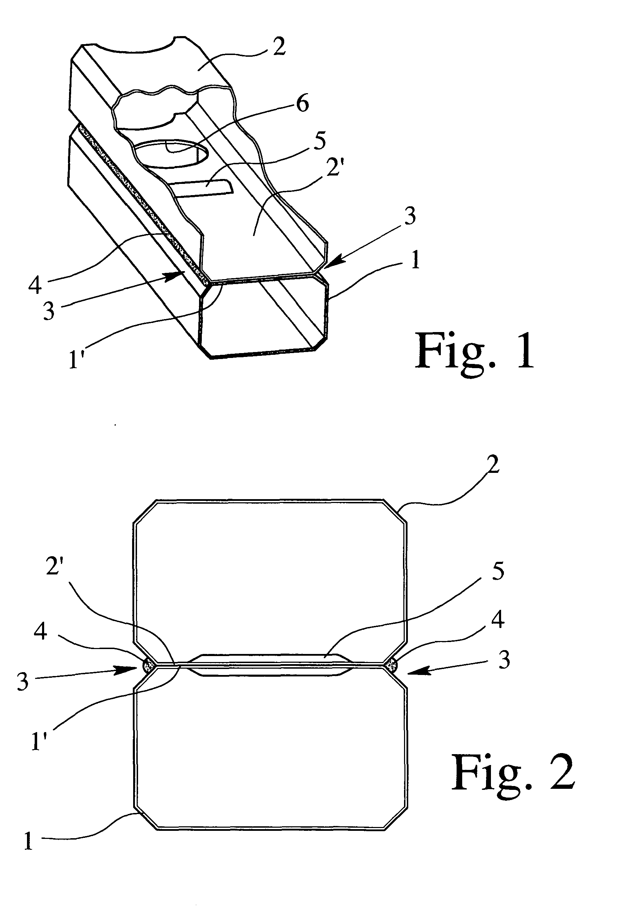

Fig. 1 shows in a perspective, schematic view a crash box which is preferably intended to be used for a vehicle bumper mounting structure. For reference to a vehicle bumper please refer to US-A-5,803,514, US-B-6,270,131, DE-A-195 45 069, DE-A-196 31 901, DE-C-40 37 408, DE-A-103 59 483. In general, a crash box is positioned in a vehicle body with an orientation such that the impact direction is the lengthwise direction thereof.

Now, as Fig. 1 shows, this crash box comprises a base profile 1 designed as a closed box hollow profile. This base profile 1 is extending in the lengthwise direction which means the lengthwise direction of the crash box as such as well as the impact direction when the crash box is mounted at its appropriate location in the vehicle body. In particular it is the lengthwise direction of the vehicle chassis where the crash box is used in a vehicle bumper mounting structure.

In addition to the base profile 1 there is a reinforcement member 2. This reinforcement member 2 is extending parallel to the base profile 1 in the lengthwise direction over more or less the full length of the base profile 1.

In the first version of the invention which is shown in Fig. 1 and 2 of the drawings the crash box is constructed in a way that the reinforcement member 2 is as well a closed box hollow profile of generally rectangular hollow cross section and is positioned at the outside of the base profile 1 with one of its flat sides 2' facing and - here - abutting the corresponding flat side 1' of the base profile 1. The base profile 1 and the reinforcement member 2 are made from metal and are connected by welding over more or less the full length of the base profile 1 at opposite corners 3 thereof. The welding seams 4 at the opposite corners 3 are indicated in Fig. 1 and Fig. 2. The welding seams 4 are design here as laser welding seams continuing without interruption over the full length of the base profile 1 and its reinforcement member 2. However, it is also possible to place a spot welding seam as welding seam 4 on each corner 3 with the welding spots equidistant over the full length of the base profile 1.

Fig. 1 and 2 show a preferred version of the invention in that the base profile 1 and the reinforcement member 2 are made as extruded beams from light metal, in particular aluminum.

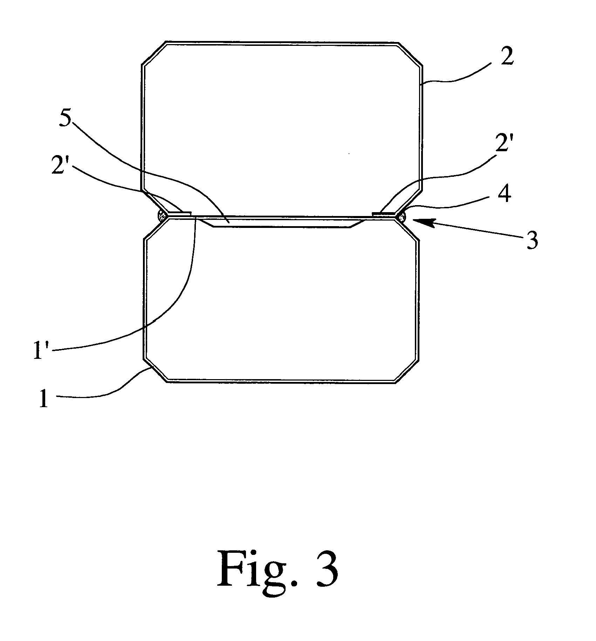

Fig. 3 shows in a cross section similar to Fig. 2 a modification of the crash box of Fig. 1, 2. Whereas the base profile 1 as well as the reinforcement member 2 both are of generally rectangular hollow cross section the flat side 2' of the reinforcement member 2 has an open middle section 7 that extends over the full length of this flat side 2'. The width of this section 7 is at least half, here and preferably at least two thirds of the full width of this flat side 2' of the reinforcement member 2. This side 2' exists only in the form of two narrow flanges abutting the flat side 1' of the base profile 1. Whereas it is still possible to apply the welding seams at opposite corners 3 of the base profile 1 (and the reinforcement member 2), this modification eliminates the double layer of sheet metal in the middle of the crash box. This improves the folding characteristics of this crash box.

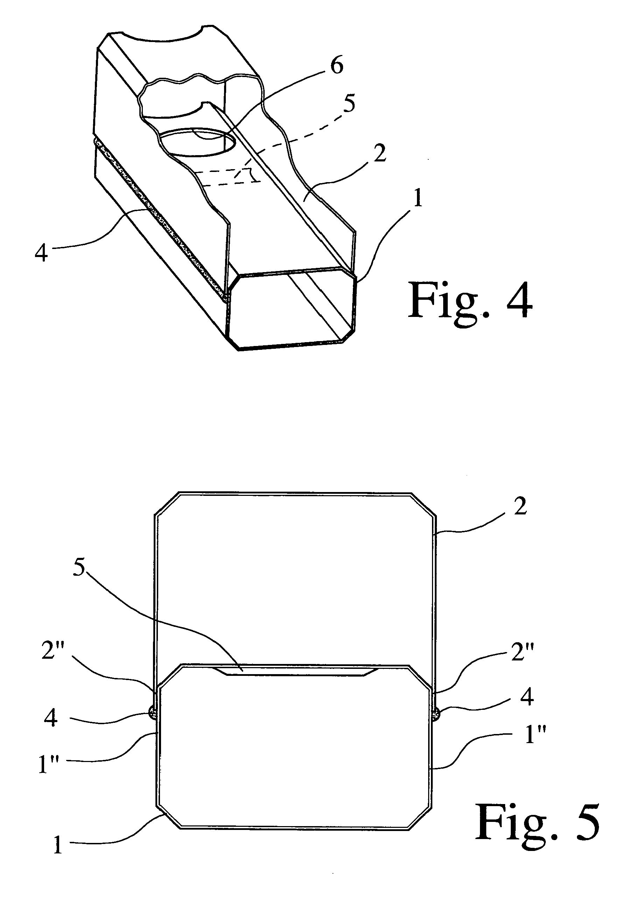

Fig. 4 and 5 show the second version of the inventive crash box. Here it is provided that the reinforcement member 2 is an open, generally U-shaped profile and is positioned at the outside of the closed base profile 1 with its open side towards the base profile 1. The base profile 1 and the reinforcement member 2 are made from metal and are connected by welding over more or less the full length of the base profile 1 at opposite flat sides 1" thereof. The rims of the opposite flat sides 2" of the reinforcement member 2 are welded to the opposite flat sides 1" of the base profile 1, again by welding seams 4. The remark regarding the welding seams 4 that has been made above is applicable here as well.

In particular, the generally rectangular closed hollow profile that is the base profile 1 in both versions and is the reinforcement member 2 in the first version, too, would be easy to manufacture as extruded beam from a light metal, in particular from aluminum. Many applications may allow to manufacture a crash box from this material. However, other applications, and those are frequent for vehicle bumper mounting structures, need steel as the high strength material.

In the present embodiment it is preferred that the base profile 1 and the reinforcement member 2 are made from sheet steel brought into its final shape by bending or roll-forming. It is preferred that the base profile 1 and, in case that it is a closed box hollow profile, the reinforcement member 2 is fixed in its final closed form by welding, spot welding, riveting, or the like. An example for a reasonable sheet steel quality may be a high strength steel sheet of about 1,0 mm thickness.

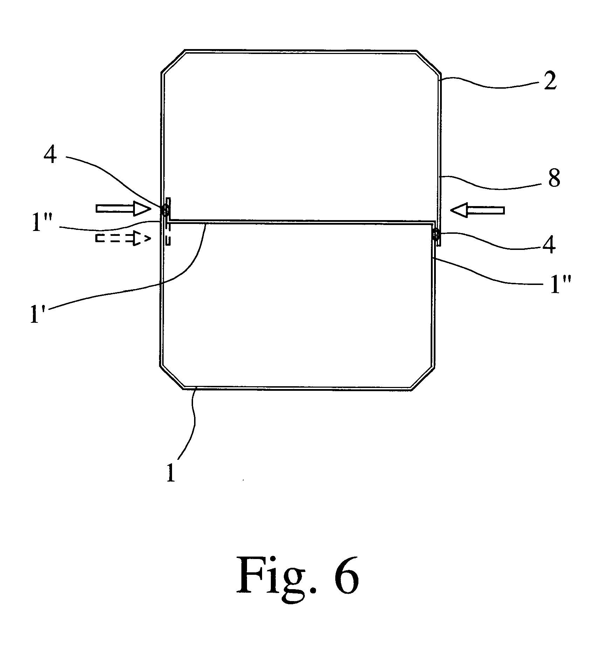

Fig. 6 shows a version where the base profile 1 and the reinforcement member 2 are made from a unitary strip of sheet metal, in particular sheet steel. The basic idea would be to form the sheet metal into the shape of the figure "8". This is not done here. In order to have a rectangular cross section of the crash box it is preferred that the unitary strip of sheet metal, here and preferably sheet steel, shall have the form of the figure "6" (or equivalent "9") which is closed by an extension 8 of the free edge thereof.

The form shown in Fig. 6 presents a rather rectangular overall cross section of the crash box, but easily accessibly welding seams 4 at opposite flat sides 1" of the base profile 1 (those welding seams 4 indicated by arrows). One lengthwise extending edge of the unitary strip of sheet metal, in Fig. 6 at the left side, can be bent upwardly or downwardly (indicated in dotted lines) to offer the flange necessary for welding.

Fig. 1 and Fig. 2 show further possibilities given with crash boxes of the invention. Here it is provided that the base profile 1 and/or the reinforcement member 2 is provided with crosswise and/or lengthwise extending ribs 5, and/or cutouts 6.

## Claims

1. Crash box,
preferably for a vehicle bumper mounting structure,
comprising
a base profile (1) of generally rectangular hollow cross section designed as a closed box hollow profile extending in a lengthwise direction and
a reinforcement member (2) extending parallel to the base profile (1) in the lengthwise direction over more or less the full length of the base profile (1),
**characterized in that**
the reinforcement member (2) is as well a closed box hollow profile of generally rectangular hollow cross section and is positioned at the outside of the base profile (1) with one of its flat sides (2') facing and/or, preferably, abutting the corresponding flat side (1') of the base profile (1),
the base profile (1) and the reinforcement member (2) are made from metal and are connected by welding over more or less the full length of the base profile (1) at opposite corners (3) thereof.

2. Crash box according to claim 1, **characterized in that**
that the base profile (1) and the reinforcement member (2) are generally identical.

3. Crash box according to claim 1, **characterized in that**
the flat side (2') of the reinforcement member (2) has an open middle section (7) that extends over the full length of said flat side (2').

4. Crash box according to claim 3, **characterized in that**
the width of the open middle section (7) is at least half, preferably at least two thirds, of the full width of said flat side (2').

5. Crash box,
preferably for a vehicle bumper mounting structure,
comprising
a base profile (1) of generally rectangular hollow cross section designed as a closed box hollow profile extending in a lengthwise direction and
a reinforcement member (2) extending parallel to the base profile (1) in the lengthwise direction over more or less the full length of the base profile (1),
**characterized in that**
the reinforcement member (2) is an open, generally U-shaped profile and is positioned at the outside of the closed base profile (1) with its open side towards the base profile (1),
the base profile (1) and the reinforcement member (2) are made from metal and are connected by welding over more or less the full length of the base profile (1) at opposite flat sides (1") thereof.

6. Crash box according to claim 5, **characterized in that**
the outer flat side of the reinforcement member (2) is oriented at an acute angle to the flat side (1') of the base profile (1) in the lengthwise direction thereof so that the crash box as such has a conical form.

7. Crash box according to any one of the claims 1 to 6, **characterized in that**
the base profile (1) and the reinforcement member (2) are made as extruded beams from light metal, in particular aluminum.

8. Crash box according to any one of the claims 1 to 6, **characterized in that**
the base profile (1) and the reinforcement member (2) are made from sheet steel brought into its final shape by bending or roll-forming.

9. Crash box according to claim 8 **characterized in that**
the base profile (1) and, in case that it is also a closed box hollow profile, the reinforcement member (2) is fixed in its final closed form by welding, spot welding, riveting, or the like.

10. Crash box according to claims 5 and 7, **characterized in that**
the base profile (1) and the reinforcement member (2) are made from a unitary strip of sheet metal, in particular sheet steel, bent in the form of the figure "6" or "9" and closed by an extension (8) of the free edge thereof, or bent in the form of the figure "8" and closed by welding in the crossover area thereof.

11. Crash box according to any one of the preceding claims, in particular claims 8 to 10, **characterized in that**
the base profile (1) and/or the reinforcement member (2) is provided with crosswise and/or lengthwise extending ribs (5) and/or cutouts (6).

## Amended claims

### Amended claims in accordance with Rule 86(2) EPC.

**1.** Crash box,
preferably for a vehicle bumper mounting structure,
comprising
a base profile (1) of generally rectangular hollow cross section designed as a closed box hollow profile extending in a lengthwise direction and
a reinforcement member (2) extending parallel to the base profile (1) in the lengthwise direction over the full length of the base profile (1),
**characterized in that**
the reinforcement member (2) is as well a closed box hollow profile of generally rectangular hollow cross section and is positioned at the outside of the base profile (1) with one of its flat sides (2') abutting the corresponding flat side (1') of the base profile (1),
the base profile (1) and the reinforcement member (2) are made from metal and are connected by a continuous seam weld or a row of spot welds over the full length of the base profile (1) at opposite corners (3) thereof.

**2.** Crash box according to claim 1, **characterized in that**
**that** the base profile (1) and the reinforcement member (2) are generally identical.

**3.** Crash box according to claim 1, **characterized in that**
the flat side (2') of the reinforcement member (2) has an open middle section (7) that extends over the full length of said flat side (2').

**4.** Crash box according to claim 3, **characterized in that**
the width of the open middle section (7) is at least half, preferably at least two thirds, of the full width of said flat side (2').

**5.** Crash box,
preferably for a vehicle bumper mounting structure,
comprising
a base profile (1) of generally rectangular hollow cross section designed as a closed box hollow profile extending in a lengthwise direction and
a reinforcement member (2) extending parallel to the base profile (1) in the lengthwise direction over the full length of the base profile (1),
wherein the reinforcement member (2) is an open, generally U-shaped profile and is positioned at the outside of the closed base profile (1) with its open side towards the base profile (1), and
wherein the base profile (1) and the reinforcement member (2) are made from metal and are connected by a continuous seam weld or a row of spot welds over the full length of the base profile (1) at opposite flat sides (1") thereof,
**characterized in that**
the outer flat side of the reinforcement member (2) is oriented at an acute angle to the flat side (1') of the base profile (1) in the lengthwise direction thereof so that the crash box as such has a conical form.

**6.** Crash box according to any one of the claims 1 to 5, **characterized in that**
the base profile (1) and the reinforcement member (2) are made as extruded beams from light metal, in particular aluminum.

**7.** Crash box according to any one of the claims 1 to 5, **characterized in that**
the base profile (1) and the reinforcement member (2) are made from sheet steel brought into its final shape by bending or roll-forming.

**8.** Crash box according to claim 7, **characterized in that**
the base profile (1) and, in case that it is also a closed box hollow profile, the reinforcement member (2) is fixed in its final closed form by welding, spot welding, riveting, or the like.

**9.** Crash box,
preferably for a vehicle bumper mounting structure,
comprising
a base profile (1) of generally rectangular hollow cross section designed as a closed box hollow profile extending in a lengthwise direction and
a reinforcement member (2) extending parallel to the base profile (1) in the lengthwise direction over the full length of the base profile (1),
**characterized in that**
the base profile (1) and the reinforcement member (2) are made from a unitary strip of sheet metal, bent in the form of the figure "6" or "9" and closed by an extension (8) of the free edge thereof, or bent in the form of the figure "8" and closed by welding in the crossover area thereof.

**10.** Crash box according to claim 9, **characterized in that**
the base profile (1) and the reinforcement member (2) are made from sheet steel brought into its final shape by bending or roll-forming.

**11.** Crash box according to any one of the preceding claims, **characterized in**
**that**
the base profile (1) and/or the reinforcement member (2) is provided with crosswise and/or lengthwise extending ribs (5) and/or cutouts (6).
